# EUROPÄISCHE PATENTANMELDUNG

(11) **EP 3 725 390 A1**
(43) Veröffentlichungstag der Anmeldung: **21.10.2020**
(21) Anmeldenummer: 19020289.5
(22) Anmeldetag: 15.04.2019
(51) Int. Cl.: B01D 53/04, B01D 53/047

(54) **VERFAHREN UND ANORDNUNG ZUR BEARBEITUNG EINES GASGEMISCHS MITTELS VAKUUMDRUCKWECHSELADSORPTION UMFASSEND EINE SORPTIONSWÄRMEPUMPE**

(71) Anmelder: Linde GmbH, 82049 Pullach (DE)
(72) Erfinder: Kontogeorgopoulos, Eythymios, 80639 München (DE)

(57) **Zusammenfassung**

Die vorliegende Erfindung betrifft ein Verfahren zur Bearbeitung eines gasförmigen ersten Komponentengemischs, bei dem das erste Komponentengemisch einer Verdichtung (1) und Abkühlung (2) unterworfen und danach einer Vakuumdruckwechseladsorption (3) zugeführt wird, und bei dem ein gasförmiges zweites Komponentengemisch mittels einer Vakuumpumpe (4) unter Erwärmung aus der Vakuumdruckwechseladsorption (3) ausgeführt wird. Es ist vorgesehen, dass die Abkühlung (2) des ersten Komponentengemischs unter Verwendung einer Sorptionswärmepumpe (6) durchgeführt wird, und dass die Sorptionswärmepumpe (6) unter Verwendung von Wärme zumindest eines Teils des zweiten Komponentengemischs betrieben wird, das mittels der Vakuumpumpe (4) unter Erwärmung aus der Vakuumdruckwechseladsorption (3) ausgeführt wurde. Eine entsprechende Anlage (100-300) ist ebenfalls Gegenstand der Erfindung.

## Beschreibung

Die vorliegende Erfindung betrifft ein Verfahren zur Bearbeitung eines Gasgemischs durch Vakuumdruckwechseladsorption und eine entsprechende Anordnung gemäß den Oberbegriffen der jeweiligen unabhängigen Patentansprüche.

### Stand der Technik

Die Herstellung von Luftprodukten in flüssigem oder gasförmigem Zustand, beispielsweise von Sauerstoff unterschiedlicher Aggregatzustände und Reinheitsgrade, durch Tieftemperaturzerlegung von Luft ist bekannt und beispielsweise bei H.-W. Häring (Hrsg.), Industrial Gases Processing, Wiley-VCH, 2006, insbesondere Abschnitt 2.2.5, "Cryogenic Rectification", beschrieben.

Gasförmiger Sauerstoff unterschiedlicher Reinheitsgrade kann alternativ zur Tieftemperaturzerlegung von Luft auch mittels Druckwechseladsorption (engl. Pressure Swing Adsorption, PSA), insbesondere mittels Vakuumdruckwechseladsorption (engl. Vacuum Pressure Swing Adsorption, VPSA) aus Luft gewonnen werden. Die VPSA unterscheidet sich von der normalen PSA insbesondere dadurch, dass die Desorption auf einem unteratmosphärischen Druckniveau erfolgt. Bei der VPSA können höhere Sauerstoffausbeuten bei geringerem Energieverbrauch erzielt werden. Zu Merkmalen und Vorteilen entsprechender Verfahren sei auf Fachliteratur verwiesen.

Die Zerlegung von Luft mittels PSA und VPSA beruht auf der unterschiedlich starken Adsorption der Luftkomponenten an ein Adsorbens. Mittels PSA oder VPSA können insbesondere sauerstoffreiche Gasgemische mit beispielsweise ca. 90 bis 95 Molprozent Sauerstoffgehalt aus Luft gewonnen werden.

Wenngleich die vorliegende Erfindung nachfolgend überwiegend auf die Bearbeitung von Luft mittels VPSA beschrieben wird, können die erfindungsgemäß vorgeschlagenen Maßnahmen grundsätzlich auch im Zusammenhang mit der Bearbeitung anderer Gasgemische als Luft durch VPSA verwendet werden. Ein Beispiel ist die Gewinnung von Wasserstoff aus dem sogenannten Brenn- oder Tailgas, das aus einem Spaltgas eines Dampfspaltverfahrens gewonnen wird.

Die Adsorption erfolgt in einer PSA oder VPSA typischerweise unter Verwendung poröser Adsorbentien. Die in der PSA oder VPSA jeweils adsorbierenden Anteile der in einem gasförmigen Einsatzgemisch enthaltenen adsorbierbaren Komponenten hängen vom Druck des Einsatzgemischs und von der Selektivität des Adsorbens ab. Ein entsprechendes Einsatzgemisch wird daher einer Verdichtung unterworfen, bevor es der PSA oder VPSA zugeführt wird.

Bei einer derartigen Verdichtung handelt es sich um einen im Wesentlichen adiabaten Prozess. Die Verdichtungsarbeit erhöht daher die innere Energie des verdichteten Einsatzgemischs, so dass sich dessen Temperatur erhöht (Verdichtungswärme). Je größer das Verdichtungsverhältnis, desto höher ist die erreichte Temperatur des Einsatzgemischs. Im Falle einer PSA oder VPSA von Luft erfolgt typischerweise eine einstufige Druckerhöhung ausgehend von Atmosphärendruck auf ein Druckniveau von 300 bis 700 mbar Überdruck. Hierbei kann die Temperatur bei einer Eintrittstemperatur in den Verdichter von 25 °C beispielsweise 60 bis 80 °C oder mehr erreichen. Da diese Temperatur für eine effektive Adsorption in der PSA oder VPSA typischerweise zu hoch ist, muss das verdichtete Einsatzgemisch auf ein Temperaturniveau von beispielsweise 40 bis 60 °C abgekühlt werden, bevor es anschließend der PSA oder VPSA zugeführt wird.

Für diese Abkühlung kommen herkömmlicherweise mit Umgebungsluft betriebene Kühler zum Einsatz. Um eine ausreichende Kühlwirkung zu erzielen, darf hierbei jedoch eine maximale Umgebungslufttemperatur nicht überschritten werden. So ist es bei einer Umgebungslufttemperatur von 40 °C und mehr typischerweise nicht mehr möglich, ausschließlich mit Umgebungsluft eine ausreichende Kühlwirkung zu erzielen. Entsprechende Umgebungslufttemperaturen können jedoch am Aufstellungsort entsprechender Anlagen, beispielsweise in den Tropen oder in Wüstengebieten, tagsüber ohne weiteres erreicht werden.

Es ist zwar möglich, in den erläuterten Fällen andere Kühlsysteme einzusetzen, beispielsweise Kompressionskältemaschinen; allerdings sind derartige Lösungen aufgrund des hohen Stromverbrauchs mit beträchtlichen Betriebskosten verbunden.

Die vorliegende Erfindung stellt sich daher die Aufgabe, eine insbesondere bezogen auf die Betriebskosten vorteilhafte Kühlung eines Einsatzgemischs für die VPSA auch unter den geschilderten Umständen zu gewährleisten.

### Offenbarung der Erfindung

Diese Aufgabe wird durch ein Verfahren zur Bearbeitung eines Gasgemischs durch Vakuumdruckwechseladsorption und eine entsprechende Anordnung mit den jeweiligen Merkmalen der unabhängigen Patentansprüche gelöst. Bevorzugte Ausgestaltungen sind jeweils Gegenstand der abhängigen Patentansprüche und der nachfolgenden Beschreibung.

Nachfolgend werden zunächst einige bei der Beschreibung der vorliegenden Erfindung und ihrer Vorteile verwendete Begriffe sowie der zugrunde liegende technische Hintergrund näher erläutert.

Ist hier von "einer PSA" bzw. "einer VPSA" die Rede, sei hierunter sowohl ein entsprechendes Verfahren bzw. ein entsprechender Verfahrensschritt, als auch eine zur Durchführung eines derartigen Verfahrens bzw. Verfahrensschritts ausgebildete technische Einrichtung verstanden.

Das bei der PSA oder VPSA verwendete Adsorbens befindet sich in Adsorptionsbehältern, wobei für einen kontinuierlichen Produktionsbetrieb typischerweise zwei oder mehr Adsorptionsbehälter verwendet werden. Die Adsorptionsbehälter werden dabei abwechselnd in einem Adsorptionstakt mit der oder den zu adsorbierenden Komponenten aus dem gasförmigen, verdichteten Einsatzgemisch beladen und in einem Desorptions- bzw. Regenerationstakt regeneriert, wobei zwischen diesen beiden Takten auch jeweils zusätzliche Zeiträume liegen können, in denen weder eine Beladung noch eine Regeneration vorgenommen wird und das Adsorbens beispielsweise mit weiteren Gasströmen gespült werden kann, um Reste des zu trennenden Gasgemischs auszuführen.

In dem erwähnten Adsorptionstakt wird das Einsatzgemisch unter Druck durch den Adsorptionsbehälter geführt, bis das enthaltende Adsorbens keine ausreichende Aufnahmekapazität für die adsorbierte(n) Komponente(n) mehr aufweist. Die Zufuhr des Einsatzgemischs wird daher unterbunden und durch eine Druckreduktion wird in dem Desorptionstakt eine Desorption der adsorbierte(n) Komponente(n) bewirkt. Die VPSA unterscheidet sich von einer herkömmlichen PSA, wie erwähnt, im Wesentlichen durch das im Desorptionstakt verwendete unteratmosphärische Druckniveau, das landläufig auch als "Vakuum" bezeichnet wird. Die VPSA zeichnet sich gegenüber einer herkömmlichen PSA in bestimmten Fällen, beispielsweise bei der Gewinnung von Sauerstoff aus Luft, durch erhöhte Ausbeuten und einen geringeren spezifischen, d.h. produktbezogenen, Energiebedarf aus.

Um einen kontinuierlichen Produktionsbetrieb sicherzustellen, können die Adsorptionsbehälter einer entsprechenden Anordnung derart im Wechselbetrieb betrieben werden, dass sich stets mindestens einer der Adsorptionsbehälter im Adsorptionstakt befindet und damit ein Produkt liefern kann. Auch in diesem Fall können jedoch Zeiträume auftreten, in denen kein Produkt geliefert wird, beispielsweise während eines Druckausgleichs bzw. Druckaufbaus. Für diesen Fall können beispielsweise Produktpuffer verwendet werden. Dies, und ein Wechselbetrieb generell, ist jedoch nicht zwingend erforderlich.

Sauerstoffreiche Luftprodukte fallen in der PSA oder VPSA aufgrund der schwächeren Adsorption des Sauerstoffs jeweils im Adsorptionstakt an und werden daher unter einem gewissen Druck gebildet, der dem Einspeisedruck in die PSA bzw. VPSA abzüglich Druckverlusten entspricht.

Flüssigkeiten und Gase können im hier verwendeten Sprachgebrauch angereichert oder abgereichert an einer oder mehreren Komponenten sein, wobei sich diese Begriffe auf einen Gehalt in einer Ausgangsflüssigkeit oder einem Ausgangsgas beziehen, aus der oder dem die betrachtete Flüssigkeit oder das betrachtete Gas gewonnen wurde. Die Flüssigkeit oder das Gas ist angereichert, wenn diese oder dieses zumindest den 1,1-fachen, 1,5-fachen, 2-fachen, 5-fachen, 10-fachen 100-fachen oder 1.000-fachen Gehalt, und abgereichert, wenn diese oder dieses höchstens den 0,9-fachen, 0,5-fachen, 0,1-fachen, 0,01-fachen oder 0,001-fachen Gehalt einer entsprechenden Komponente, bezogen auf die Ausgangsflüssigkeit oder das Ausgangsgas enthält. Ist hier beispielsweise von "Sauerstoff' die Rede, sei hierunter auch eine Flüssigkeit oder ein Gas verstanden, die oder das reich an Sauerstoff ist, jedoch nicht ausschließlich hieraus bestehen muss.

Die vorliegende Anmeldung verwendet zur Charakterisierung von Drücken und Temperaturen die Begriffe Druckniveau und Temperaturniveau, wodurch zum Ausdruck gebracht werden soll, dass Drücke und Temperaturen in einer entsprechenden Anlage nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, die beispielsweise ± 1%, 5%, 10% oder 20% um einen Mittelwert liegen. Entsprechende Druckniveaus und Temperaturniveaus können dabei in disjunkten Bereichen liegen oder in Bereichen, die einander überlappen. Insbesondere schließen Druckniveaus unvermeidliche Druckverluste ein. Entsprechendes gilt für Temperaturniveaus. Bei dem hier in bar angegebenen Druckniveaus handelt es sich um Absolutdrücke.

Unter einem Luftprodukt wird hier eine Komponente oder ein Komponentengemisch in gasförmigem oder flüssigem Zustand verstanden, welches durch trenntechnische Bearbeitung von Luft (Einsatzluft) gebildet werden kann, insbesondere durch Tieftemperaturzerlegung oder PSA bzw. VPSA. Ein Luftprodukt zeichnet sich daher insbesondere dadurch aus, dass es eine abweichende Zusammensetzung als atmosphärische Luft, aber insbesondere gegenüber atmosphärischer Luft keine zusätzlichen Komponenten aufweist.

### Vorteile der Erfindung

Bei der VPSA erfolgt die Desorption von dem beladenen Adsorbens, also der Regenerationsschritt, wie erwähnt auf einem unteratmosphärischen Druckniveau. Zur Erzielung eines derartigen unteratmosphärischen Druckniveaus wird aus dem jeweiligen Adsorptionsbehälter mittels einer Pumpe ("Vakuumpumpe") Gas abgesaugt. Auch hierbei erfolgt eine Druckerhöhung in dem abgesaugten Gasgemisch unter Erhöhung von dessen innerer Energie, also die Einbringung von entsprechender Verdichtungswärme. Die hierbei erreichten Temperaturen liegen dabei typischerweise sogar höher als die bei der Verdichtung des Einsatzgemischs in die VPSA aufgrund der Verdichtungswärme erreichten Temperaturen (siehe oben). Entsprechende Temperaturen können mitunter mehr als 100 °C erreichen.

Die vorliegende Erfindung beruht nun auf der Erkenntnis, dass sich zur Kühlung des verdichteten Einsatzgemischs für die VPSA mit besonderem Vorteil eine Sorptionswärmepumpe einsetzen lässt.

Wärmepumpen, insbesondere klassische (Kompressions-)Wärmepumpen, aber auch die im Rahmen der vorliegenden Erfindung eingesetzten Sorptionswärmepumpen sind beispielsweise aus dem Bereich der Haustechnik bekannt, aber auch in anderen Einsatzgebieten vorteilhaft einsetzbar. Es wird auf einschlägige Fachliteratur verwiesen, beispielsweise auf das Kapitel 7.2.6, "Sorptions-Wärmepumpen" bei Witz, B. (Bearb.), "Fachgerechte Planung und Ausführung von konventioneller und regenerativer Haustechnik", Forum-Verlag 2015, ISBN 978-3-86586-187-0.

Sorptionswärmepumpen unterscheiden sich von Kompressionswärmepumpen dadurch, dass ein oder mehrere Arbeitsmittel nicht mittels eines mechanischen Kompressors verdichtet wird oder werden. Es wird stattdessen ein sogenannter thermischer Verdichter eingesetzt. Sorptionswärmepumpen arbeiten wie Kompressionswärmepumpen auf Grundlage eines Kreisprozesses. Allerdings wird hierbei nicht mechanische Antriebsenergie, beispielsweise erzeugt durch elektrischen Strom, sondern (Ab-)Wärme zur Verdichtung genutzt Sorptionswärmepumpen können nach den Grundprinzipien Absorption und Adsorption arbeiten und werden entsprechend auch als Absorptions- bzw. Adsorptionswärmepumpen bezeichnet.

In einem Absorptionswärmetauscher wird ein Arbeitsmittel (beispielsweise Wasser) in einem Verdampfer verdampft. Das verdampfte Arbeitsmittel wird mittels eines weiteren Arbeitsmittels, des sogenannten Lösungsmittels (beispielsweise Lithiumbromid) absorbiert. Durch Wärmezufuhr wird das Arbeitsmittel auf einem höheren Druckniveau wieder aus dem Lösungsmittel ausgetrieben und gibt danach die Wärme in einem Kondensator als Heizenergie wieder ab. In einem Absorptionswärmetauscher kann auch beispielsweise Ammoniak als Arbeitsmittel und Wasser als Lösungsmittel eingesetzt werden. Absorptionswärmetauscher haben den besonderen Vorteil, dass für ihren Betrieb nur vergleichsweise wenig zusätzliche (elektrische) Energie benötigt wird, und zwar im Wesentlichen für eine Lösemittelpumpe, welche ein Arbeitsmittel-Lösungsmittel-Gemisch vom Verdampfer in den Austreiber transportiert.

Im Unterschied dazu beruht eine Adsorptionswärmepumpe auf der Wechselwirkung zwischen Adsorption und Desorption an einem porösen Feststoff (Adsorbens), beispielsweise Silikagel oder Zeolith. In einer Adsorptionswärmepumpe wird das mit dem Arbeitsmittel (beispielsweise Wasser) angereicherte Adsorbens durch Wärmezufuhr getrocknet. Wasserdampf wird freigesetzt, der in den Kondensator strömt, wo Wärmeenergie an das Heizsystem abgegeben wird. Auch in einer Adsorptionswärmepumpe wird keine Energie zur Verdichtung benötigt.

Die Nutzung einer Sorptionswärmepumpe ist im Zusammenhang mit der VPSA möglich und vorteilhaft, da hierbei durch die Verwendung der erwähnten Vakuumpumpe Abwärme in ausreichender Menge und auf einem günstigen Temperaturniveau (von mehr als 80 °C) anfällt. Diese Abwärme kann in der Sorptionswärmepumpe und damit zur Abkühlung des verdichteten Einsatzgemischs genutzt werden. Alternativ dazu kann das Einsatzgemisch vor der Verdichtung entsprechend abgekühlt werden, so dass auch mit der Verdichtungswärme die gewünschte Einsatztemperatur nicht überschritten wird. Es kann auch eine Kombination eines Luftkühlers und einer Sorptionswärmepumpe eingesetzt werden.

Insgesamt schlägt die vorliegende Erfindung ein Verfahren zur Bearbeitung eines gasförmigen ersten Komponentengemischs, insbesondere, aber nicht ausschließlich, Luft, vor, bei dem das erste Komponentengemisch einer Verdichtung und Abkühlung unterworfen und danach einer Vakuumdruckwechseladsorption zugeführt wird. Zu weiteren Details und Merkmalen eines entsprechenden Verfahrens sei grundsätzlich auf die zitierte Fachliteratur und auf die obigen Erläuterungen verwiesen.

Bei dem erfindungsgemäß vorgeschlagenen Verfahren wird, wie insoweit im Rahmen von Vakuumdruckwechseladsorptionsverfahren üblich, ein gasförmiges zweites Komponentengemisch mittels einer Vakuumpumpe unter Erwärmung durch Erhöhung der inneren Energie aus der Vakuumdruckwechseladsorption ausgeführt. Bei dem zweiten Komponentengemisch kann es sich um ein Produktgemisch der Vakuumdruckwechseladsorption oder, insbesondere im Falle von Luft als erstem Komponentengemisch, also Luft als Einsatzgas, um ein sogenanntes Restgas handeln. Wie erwähnt, wird bei der Bearbeitung von Luft durch Vakuumdruckwechseladsorption durch die stärkere Adsorptionsneigung von Stickstoff und Edelgasen Sauerstoff als ein Produkt gewonnen bzw. passiert Sauerstoff als die schwächer adsorbierende Komponente die Vakuumdruckwechseladsorptionseinheiten. Das erste Komponentengemisch entspricht einem Einsatzgemisch; das "erste" und "zweite" Komponentengemisch werden nur der besseren Bezugnahme halber mit entsprechenden Bezeichnungen verwendet.

Die Erwärmung des zweiten Komponentengemischs, das mittels der Vakuumpumpe aus der Vakuumdruckwechseladsorption ausgeführt wird, ergibt sich, wie auch die Erwärmung des ersten Komponentengemischs bei dessen Verdichtung, durch die eingangs erläuterte Erhöhung der inneren Energie und damit durch die Einbringung von Verdichtungswärme. Es erfolgt typischerweise keine aktive Erwärmung. Ist daher hier davon die Rede, dass die Ausführung "unter Erwärmung" ausgeführt wird, handelt es sich hierbei daher typischerweise ausschließlich um die durch die Verdichtung bewirkte Erwärmung. Die Vakuumpumpe ist als Saugpumpe ausgebildet. Es versteht sich, dass mittels der Vakuumpumpe kein echtes Vakuum im physikalischen Sinn, sondern nur das für die Vakuumdruckwechseladsorption typische unteratmosphärische Druckniveau von typischerweise 100 bis 900 mbar Absolutdruck erzielt wird. Der Begriff der "Vakuumpumpe" entspricht jedoch dem fachüblichen Sprachgebrauch.

Im Rahmen der vorliegenden Erfindung ist vorgesehen, die Abkühlung des ersten Komponentengemischs unter Verwendung einer zuvor erläuterten Sorptionswärmepumpe durchzuführen. Die Sorptionswärmepumpe wird dabei unter Verwendung von Wärme zumindest eines Teils des zweiten Komponentengemischs betrieben, das mittels der Vakuumpumpe aus der Vakuumdruckwechseladsorption ausgeführt wurde. Wie bereits zuvor erläutert, nutzt die vorliegende Erfindung also die Tatsache aus, dass sich ein aus der Vakuumdruckwechseladsorption abgezogenes Gasgemisch, im vorliegenden Fall also das zweite Komponentengemisch, bei diesem Vorgang beträchtlich erwärmt und die hierbei eingebrachte Wärme auf einem für den Betrieb einer Sorptionswärmepumpe geeigneten Temperaturniveau vorliegt. Die vorliegende Erfindung eignet sich daher besonders in Verbindung mit einer Vakuumdruckwechseladsorption der erläuterten Art. Durch den Einsatz der vorliegenden Erfindung braucht insbesondere keine energieaufwendige Kompressionswärmepumpe verwendet zu werden.

Im Rahmen der vorliegenden Erfindung kann eine Absorptionswärmepumpe als die Sorptionswärmepumpe verwendet werden, wobei in diesem Fall die Wärme zumindest eines Teils des zweiten Komponentengemischs, unter Verwendung derer die Absorptionswärmepumpe betrieben wird, zum Austreiben eines Arbeitsmittels aus einem Lösungsmittel in der Absorptionswärmepumpe verwendet wird. Alternativ dazu kann auch eine Adsorptionswärmepumpe als die Sorptionswärmepumpe verwendet werden, wobei in diesem Fall die Wärme zumindest eines Teils des zweiten Komponentengemischs, unter Verwendung derer die Adsorptionswärmepumpe betrieben wird, zum Trocknen eines Sorbens in der Adsorptionswärmepumpe verwendet wird. Und zu weiteren Details bezüglich Absorptionswärmepumpen und Adsorptionswärmepumpen sowie die hier verwendeten Arbeitsmittel sei auf den zuvor erläuterten Stand der Technik nochmals ausdrücklich verwiesen.

Im Rahmen der vorliegenden Erfindung erfolgt die Verdichtung, der das erste Komponentengemisch unterworfen wird, insbesondere auf ein Druckniveau von 100 bis 1.000 mbar über Atmosphärendruck, oder beispielsweise auf ein Absolutdruckniveau von 1,1 bis 3 bar, insbesondere von 1,2 bis 2 bar, beispielsweise von 1,3 bis 1,8 bar oder ca. 1,3 bar. Ein entsprechendes Druckniveau entspricht einem typischen Einsatzdruckniveau, mit welchem eine Vakuumdruckwechseladsorption für die erläuterten Zwecke verwendet wird.

Bei der Verdichtung erhöht sich ein Temperaturniveau des ersten Komponentengemischs um typischerweise 20 bis 60 K, beispielsweise um 30 bis 40 K, wenn die Verdichtung auf ein Druckniveau von 1,5 bar Absolutdruck vorgenommen wird. Eine entsprechende Temperaturdifferenz bzw. eine entsprechende Menge an Verdichtungswärme, die eine entsprechend derartige Temperaturdifferenz bewirkt, kann durch die erfindungsgemäß vorgeschlagenen Maßnahmen besonders vorteilhaft abgekühlt werden. Beispielsweise kann ein Eintrittsdruck des ersten Komponentengemischs in die VPSA bei 1,5 bar und der Entnahmedruck des zweiten Komponentengemischs bei 0,5 bar absolut liegen. Beim Eintritt in die VPSA beträgt das Druckverhältnis damit 1,5, beim Austritt dagegen 2 (es wird von bzw. auf Atmosphärendruck verdichtet).

Im Rahmen der vorliegenden Erfindung kann daher die Abkühlung dabei grundsätzlich stromauf oder stromab der Verdichtung erfolgen. Mit anderen Worten kann das erste Komponentengemisch nach der Abkühlung unter Verwendung der Sorptionswärmepumpe der Verdichtung unterworfen werden, oder das erste Komponentengemisch kann vor der Abkühlung unter Verwendung der Sorptionswärmepumpe der Verdichtung unterworfen werden.

Wird ein unabgekühltes erstes Komponentengemisch der Verdichtung unterworfen, kann sich dessen Temperatur durch die Verdichtung insbesondere auf ein Temperaturniveau von 60 bis 80 °C erhöhen. Dies liegt oberhalb des typischerweise für die Verwendung in einer Vakuumdruckwechseladsorption geeigneten Temperaturniveaus von 40 bis 60 °C.

Im Rahmen der vorliegenden Erfindung kann ferner eine zusätzliche Abkühlung des ersten Komponentengemischs vorgesehen sein, wobei insbesondere ein weiterer Kühler eingesetzt werden kann. Dieser weitere Kühler kann insbesondere unter Verwendung von Umgebungsluft betrieben werden, die jedoch nicht die gesamte Kühlleistung erbringen muss und daher auch ggf. bei einer höheren Umgebungslufttemperatur verwendet werden kann.

Im Rahmen der vorliegenden Erfindung wird ferner ein drittes Komponentengemisch unter einem überatmosphärischen Druckniveau aus der Vakuumdruckwechseladsorption ausgeführt. Dieses überatmosphärische Druckniveau entspricht insbesondere dem Druckniveau, auf dem das erste Komponentengemisch der Vakuumdruckwechseladsorption zugeführt wurde, abzüglich entsprechender Druckverluste, die sich durch die Adsorption von adsorbierenden Komponenten und weitere Druckverlusteffekte ergeben. Ein derartiges drittes Komponentengemisch kann insbesondere ein sauerstoffhaltiges Komponentengemisch oder reiner Sauerstoff sein, wenn Luft als das erste Komponentengemisch verwendet wird. Das dritte Komponentengemisch kann in diesem Fall insbesondere Sauerstoff in einem Gehalt von üblicherweise 90 bis maximal 95 Molprozent aufweisen.

Das zweite Komponentengemisch wird in einem Regenerationstakt aus einer oder mehreren Adsorptionseinheiten der Vakuumdruckwechseladsorption ausgeführt, und das dritte Komponentengemisch wird in einem Adsorptionstakt aus einer oder mehreren Adsorptionseinheiten der Vakuumdruckwechseladsorption ausgeführt. Wie mehrfach erwähnt, ist im Falle von Verwendung von Luft als dem ersten Komponentengemisch das zweite Komponentengemisch ein gegenüber Luft an sauerstoffabgereichertes Komponentengemisch und das dritte Komponentengemisch ist in diesem Fall ein gegenüber Luft an sauerstoffangereichertes Komponentengemisch.

Die vorliegende Erfindung erstreckt sich auch auf eine Anlage zur Bearbeitung eines gasförmigen ersten Komponentengemischs. Zu Merkmalen und Vorteilen einer entsprechenden Anlage sei auf den entsprechenden unabhängigen Patentanspruch sowie die obigen Erläuterungen zu dem erfindungsgemäß vorgeschlagenen Verfahren und seiner vorteilhaften Ausgestaltungen ausdrücklich verwiesen.

Insbesondere ist eine derartige Anlage zur Durchführung eines Verfahrens eingerichtet, wie es zuvor in unterschiedlichen Ausgestaltungen erläutert wurde, und weist hierzu entsprechend ausgebildete Mittel auf. Auf eine erneute Erläuterung wird der Übersichtlichkeit halber verzichtet.

Die Erfindung wird nachfolgend unter Bezugnahme auf die beigefügten Zeichnungen weiter erläutert, welche Ausgestaltungen der vorliegenden Erfindung zeigen.

### Kurze Beschreibung der Zeichnungen

Figur 1 zeigt eine Anordnung gemäß einer Ausführungsform der Erfindung.
Figur 2 zeigt eine Anordnung gemäß einer Ausführungsform der Erfindung.
Figur 3 zeigt eine Anordnung gemäß einer Ausführungsform der Erfindung.

### Ausführliche Beschreibung der Zeichnungen

In den Figuren sind einander baulich oder funktionell entsprechende Komponenten mit identischen Bezugszeichen angegeben und werden der Übersichtlichkeit halber nicht wiederholt erläutert. Es versteht sich, dass, wenn nachfolgend Komponenten von Anordnungen und Anlagen gemäß Ausgestaltungen der vorliegenden Erfindung beschrieben werden, diese Erläuterungen erfindungsgemäße Verfahren und deren Ausgestaltungen in gleicher Weise betreffen.

Erneut beziehen sich die nachfolgenden Erläuterungen überwiegend auf ein Verfahren zur Gewinnung von Sauerstoff durch VPSA, und damit auf Luft als Einsatzgemisch, wobei, wie erläutert, die vorliegende Erfindung jedoch auch im Zusammenhang mit der Bearbeitung anderer Gasgemische bzw. Einsatzgemische durch VPSA verwendet werden kann. Auf die obigen Erläuterungen wird nochmals ausführlich verwiesen.

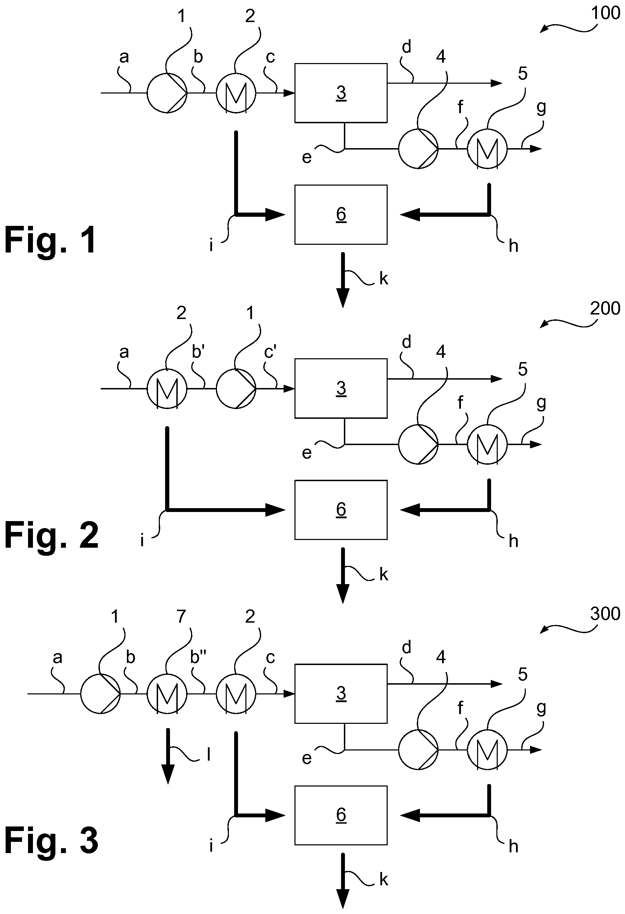

In Figur 1 ist eine Anordnung gemäß einer Ausgestaltung der vorliegenden Erfindung in Forme eines stark vereinfachten, schematischen Anlagendiagramms veranschaulicht und insgesamt mit 100 bezeichnet.

Als wesentliche Komponenten der Anordnung 100, die auch in den nachfolgenden Figuren veranschaulicht sind, sind ein Verdichter bzw. Gebläse 1, ein Kühler 2, eine VPSA 3, eine Vakuumpumpe 4, ein weiterer Kühler 5 und eine Sorptionswärmepumpe 6 veranschaulicht.

Dem Verdichter 1 wird in der Anordnung 100 ein Einsatzgemisch in Form eines Stoffstroms a zugeführt. Dieses gasförmige Einsatzgemisch wird in dem Verdichter 1 unter Erhalt eines entsprechenden verdichteten Stoffstroms b auf ein für die VPSA 3 geeignetes Druckniveau gebracht. Wie mehrfach erläutert, erwärmt sich dabei der Stoffstrom b auf ein Temperaturniveau von typischerweise 60 bis 80 °C, was oberhalb eines für die VPSA 3 günstigen Temperaturniveaus liegt. Daher erfolgt in dem Kühler 2 eine entsprechende Abkühlung, typischerweise auf ein Temperaturniveau von 40 bis 60 °C. Ein entsprechend abgekühlter Stoffstrom ist mit c bezeichnet.

Das verdichtete und abgekühlte Einsatzgemisch wird in Form des Stoffstroms c der VPSA 3 zugeführt und dort in grundsätzlich bekannter Weise bearbeitet. Aus der VPSA 3 kann hierbei ein Stoffstrom d als Produktgas abgezogen werden. Im Falle der Bearbeitung von Luft als Einsatzgemisch handelt es sich hier beispielsweise um Sauerstoff oder um ein sauerstoffreiches Gas.

Mittels der Vakuumpumpe 4 wird im jeweiligen Desorptionstakt aus den Adsorptionsbehältern der VPSA 3 Gas in Form eines Stoffstroms e auf einem unteratmosphärischen Druckniveau abgezogen. Auch in der Vakuumpumpe 4 wird dabei, wie erläutert, eine Verdichtung vorgenommen. Aufgrund des höheren Druckunterschieds bzw. Druckverhältnisses in der Vakuumpumpe 4 kann dabei ein Austrittstemperaturniveau aus der Vakuumpumpe 4 deutlich oberhalb des Temperaturniveaus des Stoffstroms b stromab des Verdichters 1 liegen, beispielsweise bei 100 °C und mehr.

Der entsprechend erwärmte Stoffstrom, hier mit f bezeichnet, wird daher in dem weiteren Kühler 5 abgekühlt, bevor dieser in Form eines Restgasstroms g beispielsweise an die Atmosphäre abgeblasen wird.

Ein wesentlicher Aspekt der in Figur 1 veranschaulichten Anordnung 100 ist nun die Verwendung der Sorptionswärmepumpe 6. Die Sorptionswärmepumpe 6 wird wie grundsätzlich zuvor erläutert betrieben und kann insbesondere als Absorptionswärmepumpe oder als Adsorptionswärmepumpe ausgebildet sein. In der Sorptionswärmepumpe 6 wird beispielsweise entweder unter Verwendung von Wärme aus einem Lösungsmittel ein Arbeitsmittel ausgetrieben oder ein Sorbens wird unter Verwendung von Wärme getrocknet.

Als Wärme wird dabei jeweils Abwärme aus dem weiteren Kühler 5 verwendet, wie hier in Form eines Pfeils h veranschaulicht. Unter Verwendung der Wärmepumpe 6 bzw. unter Einsatz entsprechender zusätzlicher Wärmetauscher kann dabei ausreichend Verdichtungswärme aus dem Stoffstrom b abgeführt werden, wie hier in Form eines Energiestroms i veranschaulicht. Die mittels der Sorptionswärmepumpe 6 abgeführte Wärme ist in Form eines Pfeils k veranschaulicht. Die Abführung der Wärme k erfolgt dabei bei Umgebungstemperatur, insbesondere mittels eines Luftkühlers.

Durch den Einsatz der Sorptionswärmepumpe 6 in der Anordnung 100 kann, wie mehrfach erläutert, im Rahmen der vorliegenden Erfindung auch bei erhöhten Umgebungslufttemperaturen von 40 °C und mehr eine ausreichende Vorkühlung des Stoffstroms b erreicht werden, bevor dieser in Form des Stoffstroms c auf einem geeigneten Temperaturniveau in die VPSA 3 eingespeist wird.

In Figur 2 ist eine Anordnung gemäß einer weiteren Ausgestaltung der vorliegenden Erfindung veranschaulicht und insgesamt mit 200 bezeichnet.

Die Anordnung 200 unterscheidet sich von der in Figur 1 veranschaulichten Anordnung 100 im Wesentlichen dadurch, dass der Kühler 2 stromauf des Verdichters 1 angeordnet ist. Auf diese Weise kann in dem Kühler 2 das Einsatzgemisch des Stoffstroms a zunächst unter Erhalt eines Stoffstroms b' vorgekühlt werden, so dass dieser auch bei zusätzlicher Erwärmung in dem Verdichter 1 in Form eines Stoffstroms c' vorliegt, der eine ausreichend niedrige Temperatur aufweist, so dass er in die VPSA 3 eingespeist werden kann. Die übrigen Merkmale der Anordnung 200 gemäß Figur 2 können den Merkmalen der Anordnung 100 gemäß Figur 1 entsprechen.

In Figur 3 ist eine Anordnung gemäß einer weiteren Ausgestaltung der vorliegenden Erfindung veranschaulicht und insgesamt mit 300 bezeichnet. Die Anordnung 300 gemäß Figur 3 unterscheidet sich dabei von der Anordnung 100 gemäß Figur 1 im Wesentlichen dadurch, dass zusätzlich zu dem Kühler 2 ein weiterer Kühler 7 stromauf des Kühlers 2 eingesetzt wird.

Der weitere Kühler 7 kann insbesondere mit Umgebungsluft betrieben werden und dabei bereits einen Anteil der Verdichtungswärme des Stoffstroms b an die Umgebung abführen, wie hier in Form eines Pfeils I veranschaulicht. Zu dem Wärmetauscher 2 gelangt damit ein Stoffstrom b". Dieser Stoffstrom b" wird in dem Wärmetauscher 2 unter Erhalt des bereits mehrfach erläuterten Stoffstroms c weiter abgekühlt.

Die weiteren Komponenten der Anordnung 300 können insbesondere den Komponenten der Anordnung 100 bzw. 200 gemäß den Figuren 1 bzw. 2 entsprechen. Die in Figur 3 veranschaulichte Anordnung 300 kann insbesondere auch mit der in Figur 2 veranschaulichten Anordnung 200 kombiniert werden, d.h. der weitere Kühler 7 kann an beliebiger Stelle stromauf und/oder stromab des Kühlers 2 bzw. des Verdichters 1 in der Anordnung 200 gemäß Figur 2 eingesetzt werden.

## Patentansprüche

1. Verfahren zur Bearbeitung eines gasförmigen ersten Komponentengemischs, bei dem das erste Komponentengemisch einer Verdichtung (1) und Abkühlung (2) unterworfen und danach einer Vakuumdruckwechseladsorption (3) zugeführt wird, und bei dem ein gasförmiges zweites Komponentengemisch mittels einer Vakuumpumpe (4) unter Erwärmung aus der Vakuumdruckwechseladsorption (3) ausgeführt wird, **dadurch gekennzeichnet, dass** die Abkühlung (2) des ersten Komponentengemischs unter Verwendung einer Sorptionswärmepumpe (6) durchgeführt wird, und dass die Sorptionswärmepumpe (6) unter Verwendung von Wärme zumindest eines Teils des zweiten Komponentengemischs betrieben wird, das mittels der Vakuumpumpe (4) unter Erwärmung aus der Vakuumdruckwechseladsorption (3) ausgeführt wurde.

2. Verfahren nach Anspruch 1, bei dem eine Absorptionswärmepumpe als die Sorptionswärmepumpe (6) verwendet wird, wobei die Wärme zumindest eines Teils des zweiten Komponentengemischs, unter Verwendung derer die Sorptionswärmepumpe (6) betrieben wird, zum Austreiben eines Arbeitsmittels aus einem Lösungsmittel in der Absorptionswärmepumpe verwendet wird.

3. Verfahren nach Anspruch 1, bei dem eine Adsorptionswärmepumpe als die Sorptionswärmepumpe (6) verwendet wird, wobei die Wärme zumindest eines Teils des zweiten Komponentengemischs, unter Verwendung derer die Sorptionswärmepumpe (6) betrieben wird, zum Trocknen eines Sorbens in der Adsorptionswärmepumpe verwendet wird.

4. Verfahren nach einem der vorstehenden Ansprüche, bei dem die Verdichtung (1), der das erste Komponentengemisch unterworfen wird, auf ein Druckniveau von 100 bis 1.000 mbar über Atmosphärendruck durchgeführt wird.

5. Verfahren nach einem der vorstehenden Ansprüche, bei dem ein Temperaturniveau des ersten Komponentengemischs bei der Verdichtung (1) des ersten Komponentengemischs um 20 bis 60 K erhöht wird.

6. Verfahren nach einem der vorstehenden Ansprüche, bei dem das erste Komponentengemisch nach der Abkühlung (2) unter Verwendung der Sorptionswärmepumpe (6) der Verdichtung (2) unterworfen wird.

7. Verfahren nach einem der Ansprüche 1 bis 5, bei dem das erste Komponentengemisch vor der Abkühlung (2) unter Verwendung der Sorptionswärmepumpe (6) der Verdichtung (2) unterworfen wird.

8. Verfahren nach einem der vorstehenden Ansprüche, bei dem ein Temperaturniveau des ersten Komponentengemischs nach der Verdichtung (1) und vor der Abkühlung bei 60 bis 80 °C liegt.

9. Verfahren nach einem der vorstehenden Ansprüche, bei dem die Abkühlung (2) des ersten Komponentengemischs ferner unter Verwendung eines weiteren Kühlers (7) durchgeführt wird.

10. Verfahren nach Anspruch 9, bei dem der weitere Kühler (7) unter Verwendung von Umgebungsluft betrieben wird.

11. Verfahren nach einem der vorstehenden Ansprüche, bei dem ein drittes Komponentengemisch unter einem überatmosphärischen Druckniveau aus der Vakuumdruckwechseladsorption (3) ausgeführt wird.

12. Verfahren nach Anspruch 11, bei dem das zweite Komponentengemisch in einem Regenerationstakt aus einer oder mehreren Adsorptionseinheiten der Vakuumdruckwechseladsorption (3) ausgeführt wird, und bei dem das dritte Komponentengemisch in einem Adsorptionstakt aus einer oder mehreren Adsorptionseinheiten der Vakuumdruckwechseladsorption (3) ausgeführt wird.

13. Verfahren nach Anspruch 11 oder 12, bei dem das erste Komponentengemisch Luft ist, bei dem das zweite Komponentengemisch ein gegenüber Luft an Sauerstoff abgereichertes Komponentengemisch ist, und bei dem das dritte Komponentengemisch ein gegenüber Luft an Sauerstoff angereichertes Komponentengemisch ist.

14. Anlage (100-300) zur Bearbeitung eines gasförmigen ersten Komponentengemischs, mit Mitteln, die dafür eingerichtet sind, das erste Komponentengemisch einer Verdichtung (1) und Abkühlung (2) zu unterwerfen und danach einer Vakuumdruckwechseladsorption (3) zuzuführen, und mit Mitteln, die dafür eingerichtet sind, ein gasförmiges zweites Komponentengemisch mittels einer Vakuumpumpe (4) unter Erwärmung aus der Vakuumdruckwechseladsorption (3) auszuführen, **dadurch gekennzeichnet, dass** eine Sorptionswärmepumpe (6) zur Abkühlung (2) des ersten Komponentengemischs bereitgestellt ist, und dass Mittel bereitgestellt sind, die dafür eingerichtet sind, die Sorptionswärmepumpe (6) unter Verwendung von Wärme zumindest eines Teils des zweiten Komponentengemischs zu betreiben, das mittels der Vakuumpumpe (4) unter Erwärmung aus der Vakuumdruckwechseladsorption (3) ausgeführt wurde.

15. Anordnung (100-300) nach Anspruch 14 die zur Durchführung eines Verfahrens nach einem der Ansprüche 1 bis 13 eingerichtet ist.
